(19) Europäisches Patentamt
European Patent Office
Office européen des brevets

(11) EP 4 083 101 A1

# (12) EUROPEAN PATENT APPLICATION

(43) Date of publication:
**02.11.2022 Bulletin 2022/44**

(21) Application number: **21171099.1**

(22) Date of filing: **29.04.2021**

(51) International Patent Classification (IPC):
***C08G 18/40*** *(2006.01)* ***C08G 18/72*** *(2006.01)*
***C08J 5/00*** *(2006.01)* ***C08K 9/02*** *(2006.01)*
***B29C 70/04*** *(2006.01)* ***B29C 70/48*** *(2006.01)*

(52) Cooperative Patent Classification (CPC):
(C-Sets available)
**C08G 18/40; B29C 70/443; B29C 70/683;**
**C08G 18/72; C08J 5/00; C08K 9/02;**
B29L 2031/085 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

## (54) METHOD FOR PREPARING A POLYURETHANE COMPOSITE MATERIAL BY VACUUM INFUSION PROCESS

(57) The invention relates to a method for preparing a composite material, the composite material prepared by the method, and the use thereof. The method for a preparing a composite material of the present invention can improve production efficiency and save raw materials and production costs.

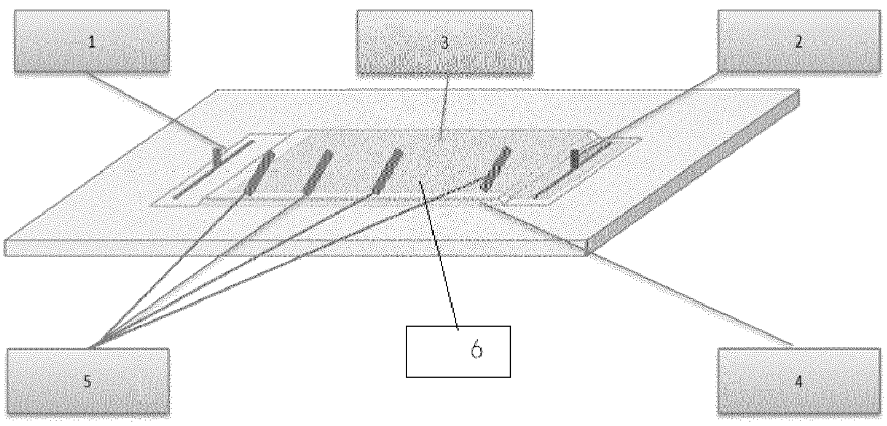


Fig. 1

EP 4 083 101 A1

(52) Cooperative Patent Classification (CPC): (Cont.)

C-Sets
**C08K 9/02, C08L 75/04**

## Description

### Technical Field

The invention relates to a method for preparing a composite material, the composite material prepared by the method, and the use thereof.

### Background

Composite materials are widely used in various fields, such as pultruded window frames, household appliances and furniture, and wind turbine blades. In recent years, resin composite materials, especially polyurethane resin composite materials, have attracted more and more attention for their superiority in the preparation of wind turbine blades. Wind energy is considered to be one of the cleanest and most environmentally friendly energy sources currently available. Therefore, wind turbines are always in demand by the market. However, core materials, fiber reinforcing materials, and flow media, etc. for preparing composite materials usually contain a certain amount of moisture. Thus, drying for dehydrations required before introducing the resin reaction system. Especially the core materials, due to the material and thickness thereof, often need to be dried in advance. The dried core materials are very likely to get moist again during stand-by for further processing. How to further improve the efficiency of drying and the production efficiency is a problem to be solved urgently in this field.

US20200316892A1 discloses a method for preparing main spars and web plates of wind turbine blades with polyurethane, and a method for preparing blade shells with epoxy or other resins, as well as polyurethane blades and the balsa wood vacuum infusion technology. CN106751737B discloses a method for manufacturing thermosetting resin composites, in which polyurethane infusion and molecular sieves were mentioned. CN106414577A discloses template-assisted production of porous materials, in which balsa wood and molecular sieves were mentioned. CN104149359A discloses a method for manufacturing rotor blades for wind turbines. CN105308085B discloses a curable resin composition.

Despite the above disclosures, there is still an urgent need in the market for a more efficient and better method for producing polyurethane composite materials.

### Summary of the invention

One aspect of the present invention is to provide a method for treating a core material for preparing a composite material, comprising:

drying at least a core material;
at least partially covering the core material with at least a desiccant.

Preferably, "at least partially covering the core material (the same below)" means covering at least a part of the outer surface area of the core material, which may be ≥ 50% of the outer surface area of the core material, preferably ≥ 60% of the outer surface area of the core material, more preferably ≥ 70% of the outer surface area of the core material, particularly preferably ≥ 80% of the outer surface area of the core material.

Preferably, the desiccant is selected from molecular sieve desiccants with a type selected from 3A (potassium A type), 4A (sodium A type), 5A (calcium A type), 10Z (calcium Z type), 13Z (sodium Z type), Y (sodium Y type), sodium mordenite type or any combination thereof, preferably 3A.

Preferably, the desiccant is selected from aluminosilicates, calcium sulfate, calcium chloride, silica gel, alumina, montmorillonite, molecular sieves, calcium oxide, sodium sulfate, magnesium perchlorate, anhydrous copper sulfate, fibers, minerals, preferably molecular sieves and aluminosilicates.

Preferably, the core material is selected from balsa wood, PVC foam, SAN foam, polyurethane foam, PS foam, PMI foam and PET foam.

Preferably, the drying is drying under vacuum, more preferable drying by heating while drying under vacuum.

Yet another aspect of the present invention is to provide a method for preparing a composite material, comprising:

carrying out the method for treating a core material of the present invention as above,
comprising specifically: drying at least a core material; and at least partially covering the core material with at least a desiccant;
introducing a resin reaction system and curing the resin reaction system to obtain the composite resin.

Preferably, the resin is selected from epoxy resins, polyurethane resins, phenolic resins, acrylonitrile-butadiene-styrene resins, polyamide resins, polyethylene resins or any combination thereof, preferably epoxy resins, polyurethane resins or any combination thereof, and more preferably polyurethane resins.

Preferably, the polyurethane resin reaction system comprises:

component A comprising one or more organic polyisocyanates;
component B comprising:

b1) one or more organic polyols in a content of 21-60% by weight, based on 100% by weight of the total weight of the polyurethane reaction system,
b2) one or more compounds with the structure of formula (I)

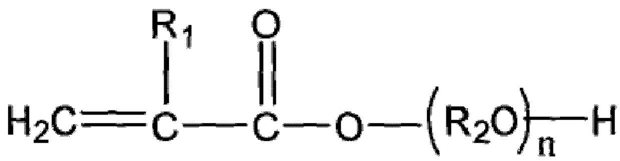

I

wherein $R_1$ is selected from hydrogen, methyl or ethyl; $R_2$ is selected from alkylene groups having 2-6 carbon atoms, propane-2,2-bis(4-phenylene), 1,4-xylylene, 1,3-xylylene, 1,2-xylylene; and n is an integer selected from 1-6; and

component C, a free radical initiator.

Preferably, the functionality of the organic polyol is of 1.7-6, preferably 1.9-4.5, and the hydroxyl number thereof is of 150-1100 mgKOH/g, preferably 150-550 mgKOH/g.

Preferably, the content of component b2) is of 4.6-33% by weight, based on 100% by weight of the total weight of the polyurethane reaction system.

Preferably, component b2) is selected from one, two or more of hydroxyethyl methacrylate, hydroxypropyl methacrylate, hydroxybutyl methacrylate, hydroxyethyl acrylate, hydroxypropyl acrylate and hydroxybutyl acrylate.

Yet another aspect of the present invention is to provide a composite material prepared by the method for preparing a composite material of the present invention as above. The composite material comprises a desiccant. Preferably, the desiccant is selected from molecular sieve desiccants with a type selected from 3A (potassium A type), 4A (sodium A type), 5A (calcium A type), 10Z (calcium Z type), 13Z (sodium Z type), Y (sodium Y type), sodium mordenite type or any combination thereof, preferably 3A.

Preferably, the desiccant is selected from aluminosilicates, calcium sulfate, calcium chloride, silica gel, alumina, montmorillonite, molecular sieves, calcium oxide, sodium sulfate, magnesium perchlorate, anhydrous copper sulfate, fibers, minerals, preferably molecular sieves and aluminosilicates. The desiccant can be incorporated into the resin without being removed, and become a part of the composite material.

Yet another aspect of the present invention is to provide a method for preparing a reinforced composite material, comprising:

1) carrying out the method for treating a core material of the present invention;
2) placing at least a reinforcing material, the core material treated in step 1), and at least a flow medium in a mold;
3) dehumidifying;
4) introducing a resin reaction system and curing the resin reaction system to obtain the reinforced composite material.

Preferably, the step 1) comprises:

a) drying at least a core material;
b) covering the at least a core material, which has been dried, with at least a desiccant.

Preferably, the desiccant is selected from molecular sieve desiccants with a type selected from 3A (potassium A type), 4A (sodium A type), 5A (calcium A type), 10Z (calcium Z type), 13Z (sodium Z type), Y (sodium Y type), sodium mordenite type or any combination thereof, preferably 3A.

Preferably, the desiccant is selected from aluminosilicates, calcium sulfate, calcium chloride, silica gel, alumina, montmorillonite, molecular sieves, calcium oxide, sodium sulfate, magnesium perchlorate, anhydrous copper sulfate, fibers, minerals, preferably molecular sieves and aluminosilicates.

Preferably, the core material is selected from balsa wood, PVC foam, SAN foam, polyurethane foam, PS foam, PMI foam and PET foam.

Preferably, the reinforcing material is selected from entangled glass fiber layers, glass fiber woven fabrics and glass fiber gauzes, cut or ground glass fibers or mineral fibers, as well as fiber mats, fiber nonwovens and fiber knits based on polymer fibers, mineral fibers, carbon fibers, glass fibers or aramid fibers, and mixtures thereof.

Preferably, the flow medium comprises a peel ply, and said peel ply is preferably a polyester peel ply.

Preferably, the method further comprises:

placing the reinforcing material, the at least a core material covered with at least a desiccant, and the at least a flow medium in a mold, covering the reinforcing material, the core material and/or the flow medium with a first film, and sealing the rim of the first film with the mold, and vacuumizing between the first film and the mold;
laying a second film to cover the first film, fixing the second film, sealing the rims of the first film and the second film, and reserving an air inlet channel and an air outlet channel; heating the mold, while filling hot air between the first film and the second film.

Preferably, the time needed for dehumidifying in the method for preparing a reinforced composite material comprising 1) carrying out the method/step for treating a core material is reduced by $\geq$ 50%, preferably $\geq$ 70%, and more preferably $\geq$ 100%, compared with the method for preparing a reinforced composite material without 1) carrying out the method/step for treating a core material. Specifically, (y-x)/y% is the reduced value of the time needed for dehumidifying, in which the time needed for dehumidifying in the method for preparing a reinforced composite material comprising 1) carrying out the method/step for treating a core material is x, and the time in the method for preparing a reinforced composite material without 1) carrying out the method/step for treating a core material is y.

Preferably, the time needed for dehumidifying in the method comprising step b) covering the at least a core material, which has been dried, with at least a desiccant is reduced by $\geq$ 50%, preferably $\geq$ 70%, more preferably $\geq$ 100%, compared with the method without step b). Specifically, (k-j)/k% is the reduced value of the time needed for dehumidifying, in which the time needed for dehumidifying in the method comprising step b) covering the at least a core material, which has been dried, with at least a desiccant is j, and the time needed in the method for preparing a reinforced composite material without step b) is k.

Preferably, the method further comprises placing at least a humidity indicating agent on the reinforcing material, the core material or the flow medium before the dehumidifying in step 3), wherein the dehumidifying is performed under vacuum until the color of the humidity indicating paper/agent changes.

Preferably, the humidity/moisture indicating paper/agent is selected from cobalt chloride, and the color changes into blue color.

Preferably, the color changes into that selected from any color of range b*<-15, preferably <-17, and more preferably -25 to -18 in the color value (the test method referring to CIE 1976 L*a*b*).

Yet another aspect of the present invention is to provide the use of the reinforced composite material of the present invention in blades for wind turbines.

Yet another aspect of the present invention is to provide a reinforced resin product comprising the reinforced composite material of the present invention.

Preferably, the polyurethane product is selected from spar caps, web plates, blade roots and/or blade housings of turbine blades, radomes, single or sandwich continuous sheets, yacht shells, window frames, door frames, ladder frames, cross arms for telegraph poles, tent brackets, solar cell holders, solar cell frames, antenna radomes, radar radomes, highway guardrails, cable troughs, container floors, winding pipes, telegraph poles, engine hoods, car trunks, luggage racks, golf shafts, tennis shafts, badminton shafts, bicycle frames, surfboards or snowboards, preferably spar caps, web plates, blade roots and/or blade shells of the turbine blades.

By repeated experiments, it is found unexpectedly that the method for treating a core material of the present invention, which comprises a character such as at least partially covering the core material with a desiccant, can dry the core material simply, economically, and efficiently, and ensure and maintain the drying effect. Therefore, it can be ensured that the subsequent further production of composite materials or reinforced composite materials can be carried out well and efficiently, and composite materials and reinforced composite materials with high-quality and satisfactory surface conditions can be obtained.

At the same time, the method of the present invention indicates the humidity change inside the mold objectively and effectively, which may accurately indicate the completion of dehumidifying. In other words, it can objectively and accurately determine the time of starting to infuse the resin reaction system, especially the polyurethane reaction system, thereby improving production efficiency, saving resources and being more favorable to environmental protection. Moreover, the addition of the humidity/moisture indicating agent/paper may help to indicate whether the film/bag film is partially damaged or leaks, so that it can be repaired in time to avoid delays and losses.

As described above, the resin suitable for the present invention is preferably a polyurethane resin. Compared with epoxy resins, the polyurethane resin of the present invention has a greatly reduced viscosity, and good weather resistance and fatigue resistance, which can ensure the service life of articles made from the composite material. The polyurethane reaction system of the present invention has a short curing period, which can improve the equipment utilization. It is also easier to control the residual amount of the resin in the production process, which can reduce the production costs. The polyurethane reaction system of the present invention is non-foamed and does not contain a foaming agent or even water. Since the polyurethane reaction system reacts with moisture to foam, it needs to be dried when applied in composite materials. Therefore, the method of the present invention particularly greatly improves the production process and production efficiency related to polyurethane resins.

In addition, the polyurethane reaction system contained in the method of the present invention has a long operating time, which makes it possible to obtain polyurethane composite materials with uniform quality and excellent physical properties when preparing large polyurethane products. In particular for large polyurethane products, the method of the present invention provides an effective solution for the severe application conditions of polyurethanes (for example, sensitive to water), and saves costs while achieving high production efficiency, and is more environmentally friendly.

## Description of the drawings

The present invention will be exemplary illustrated below with reference to the drawings, in which:

Figure 1 shows the mold and the layers arranged thereon shown in the method for preparing a composite material according to a preferred embodiment of the present invention, wherein 1 represents an air extracting pipe; 2 represents a peel ply and a flow mesh; 3 represents an injection pipe; 4 represents a core material, and a fiber reinforcing material; 5 represents a humidity indicating paper; 6 represents a desiccant (the desiccant being at least partially covered on the core material, located in the dark part of the picture, and covered with the peel ply and the flow mesh, which are not shown explicitly to avoid confusion).

Fig. 2 shows a photograph of the core material after being treated by the method for treating a core material of the present invention in Example 1 according to a preferred embodiment of the present invention.

Fig. 3 shows a photograph of the surface condition of the composite material prepared by the method for preparing the composite material in Example 1 according to a preferred embodiment of the present invention.

Fig. 4 shows a photograph of the surface condition of the composite material prepared by the method for preparing a composite material in Comparative Example 1.

## Embodiments

The aspects of the present invention will now be described in detail.

The method for treating a core material for preparing a composite material according to the present invention comprises:

drying at least a core material;
at least partially covering the core material with at least a desiccant.

Preferably, "at least partially covering the core material" means covering at least a part of the outer surface area of the core material, which may be ≥ 50% of the outer surface area of the core material, preferably ≥ 60% of the outer surface area of the core material, more preferably ≥ 70% of the outer surface area of the core material, particularly preferably ≥ 80% of the outer surface area of the core material.

Preferably, the desiccant is selected from molecular sieve desiccants with a type selected from 3A (potassium A type), 4A (sodium A type), 5A (calcium A type), 10Z (calcium Z type), 13Z (sodium Z type), Y (sodium Y type), sodium mordenite type or any combination thereof, preferably 3A.

The desiccant of the present invention refers to a substance that can remove moisture from a moist substance. Desiccants useful in the present invention include, but are not limited to, calcium chloride, silica gel, montmorillonite, molecular sieves, calcium oxide, alumina, calcium sulfate, sodium sulfate, magnesium perchlorate, anhydrous copper sulfate, fibers, minerals, and the like. The preferred desiccant of the present invention is molecular sieve. The molecular sieve suitable for the present invention is a desiccant product that can be synthesized artificially and has strong adsorption to water molecules. All molecular sieve products commercially available in the relevant market are suitable for the present invention, which may be selected from various types as mentioned above, preferably 3A. Specifically, crystalline aluminosilicate compounds may be included.

The desiccant used in the embodiments of the present invention can be incorporated into the resin without removing it, upon the resin reaction system being introduced, and has no effect on the resin. Moreover, it can also protect the core material such as balsa wood from moisture absorption and reversion during the laying process of the layers, without affecting the performance of the resin. In this way, the time and difficulty of subsequent dehumidifying may be greatly reduced, thereby greatly improving the production efficiency and yield.

The flow medium refers to a substance having a porous structure, which may be a material obtained by braiding, weaving, knitting, extruding or crocheting, a foam or a substance having a sieve or a network structure itself. Specifically, it includes but is not limited to woven flow meshes, pressed flow meshes, continuous fiber felts and hybrid flow meshes, for example, those obtained by mixing two or more of fiber fabrics such as woven flow meshes, pressed flow meshes, continuous fiber felts and chopped fiber felts. Those skilled in the art are familiar with materials that can be used as a flow medium, including but not limited to, polystyrene (PS), polyurethane (PUR), polyphenylene oxide (PPO), polypropylene, ABS, and glass fiber fabrics. Porous components or flow media are primarily used to aid in vacuumizing during the drying process and in guiding flow during the introduction of the polyurethane reaction system/liquid material.

The fiber reinforcing material of the present invention refers to a material used for reinforcement in the composite material. When used in the present invention, there is no requirement on the shape and size of the fiber reinforcing material. For example, it may be continuous fibers, a fiber web formed by bonding, fiber felts or a fiber fabrics. In some embodiments of the present invention, the fiber reinforcing material is selected from glass fibers, carbon fibers, polyester fibers, natural fibers, aramid fibers, nylon fibers, basalt fibers, boron fibers, silicon carbide fibers, asbestos fibers, whiskers, metal fibers or a combination thereof.

The method of the present invention may also comprise a peel ply. The peel ply that may be used in the present invention is preferably a polyester peel ply, which refers to a peel ply made of polyester fibers. Polyester fibers, abbreviated as PET fibers, and commonly known as "Dacron", and refers to a general term for fibers made from polyesters obtained by polycondensation of various diols and aromatic dicarboxylic acids or esters thereof. Preferably, the polyester peel ply is selected from plain weaves, twill weaves, satin weaves made of continuous fibers by weaving methods or fabrics made by knitting methods or fabrics directly made by stitching methods.

The polyester peel ply may be placed between the reinforcing material and the mold, or may be placed between the reinforcing material and/or the core material and the flow medium (such as a flow mesh).

The mold useful in the present invention includes, but not limited to, a mold for wind turbine blades and/or parts thereof, a mold for aircrafts and/or parts thereof, a mold for hulls and/or parts thereof, a mold for car bodies and/or parts thereof, and the like. In the embodiments of the present invention, the mold is preferably one that can be used to manufacture wind turbine blades and/or parts thereof by a polyurethane vacuum infusion process. The mold may have heating function.

The method for introducing the resin reaction system of the present invention may be casting, infusion, injection, etc., preferably vacuum infusion.

Optionally, the method for drying or dehumidifying the peel ply, reinforcing material, flow medium and/or core material of the present invention may be selected from vacuumizing and/or heating. The heating method is selected from one, two or more of mold heating, electric blanket heating, electric film heating, microwave heating, infrared heating and hot air heating. The electric blanket heating and the electric film heating means that the electric blanket and the electric film are placed under the mold or cover the film outside, and it is heated by supplying electric current. Other conventional heating methods in the art can all be used in the present invention.

The experimental results show that the present invention provides a method for preparing a composite material having higher efficiency and accuracy and being more energy-saving, in which dehumidifying can be performed economically and efficiently, the dried core material does not need to be wrapped and sealed separately for avoiding moisture reversion, and the process is simplified and the difficulty of subsequent dehumidifying is reduced. The time can be visually displayed when the dehumidifying is completed and the resin reaction system can be introduced, so that it is more favorable to environmental protection while greatly improving the production efficiency of the composite material and saving costs. In particular for large polyurethane products, the method of the present invention effectively reduces the adverse effects caused by the severe application conditions of polyurethanes (for example, sensitive to water), and achieves high production efficiency economically and effectively. In addition, the polyurethane reaction system of the present invention has a long operating time, which makes it possible to obtain polyurethane composite materials with uniform quality and excellent physical properties when preparing large polyurethane products. For the polyurethane vacuum infusion process for large parts, it is usually necessary to cover with a film/bag film to maintain the vacuum degree, but the film is easy to leak and break, causing increasement in internal humidity, which is unfavorable for partial or overall dehumidifying. The use of humidity indicating agent/paper may help quickly and accurately find the leakage or damage of the film, so that it can be repaired in time to avoid or reduce its adverse effects.

The resin of the invention may be selected from epoxy resins, polyurethane resins, phenolic resins, acrylonitrile-butadiene-styrene resins, polyamide resins, polyethylene resins or any combination thereof, preferably epoxy resins, polyurethane resins or any combination thereof, and more preferably polyurethane resins. The polyurethane reaction

system of the present invention comprises component A) comprising a polyisocyanate; and component B) comprising a polyol.

The polyisocyanate of the present invention may be an organic polyisocyanate, which may be any aliphatic, alicyclic or aromatic isocyanate known to be used in the preparation of polyurethanes.

Examples thereof include, but are not limited to, toluene diisocyanate (TDI), diphenylmethane diisocyanate (MDI), polyphenylpolymethylene polyisocyanate (pMDI), 1,5-naphthalene diisocyanate (NDI), hexamethylene diisocyanate (HDI), methylcyclohexylene diisocyanate (TDI), 4,4'-dicyclohexylmethane diisocyanate, isophorone diisocyanate (IPDI), *p*-phenylene diisocyanate (PPDI), *p*-xylylene diisocyanate (XDI), tetramethylxylylene diisocyanate (TMXDI) and their polymers, or a combination thereof. The functionality of the isocyanate usable in the present invention is preferably 2.0-3.5, particularly preferably 2.1-2.9. The viscosity of the isocyanate is preferably 5-700 mPa·s, particularly preferably 10-300 mPa·s, measured at 25°C according to DIN 53019-1-3.

When used in the present invention, the organic polyisocyanate includes dimers, trimers, tetramers, pentamers of the isocyanates, or a combination thereof.

In a preferred embodiment of the present invention, the isocyanate component A) is selected from diphenylmethane diisocyanate (MDI), polyphenylpolymethylene polyisocyanate (pMDI), and their polymers, prepolymers or a combination thereof.

A blocked isocyanate may also be used as the isocyanate component A), which may be prepared by reacting an excess of organic polyisocyanates or a mixture thereof with a polyol compound. These compounds and their preparation methods are well known to those of ordinary skill in the art.

Component B) of the polyurethane reaction system of the present invention comprises b1) one or more organic polyols. The content of the organic polyol is of 21-60% by weight, based on 100% by weight of the total weight of the polyurethane reaction system. The organic polyols may be those commonly used in the art for preparing polyurethanes, including but not limited to, polyether polyols, polyether carbonate polyols, polyester polyols, polycarbonate diols, polymer polyols, vegetable oilbased polyols or a combination thereof.

The polyether polyols can be prepared by a known process, for example, by reacting an olefin oxide with a starter in the presence of a catalyst. The catalyst is preferably, but not limited to, an alkaline hydroxide, an alkaline alkoxide, antimony pentachloride, boron fluoride etherate, or a mixture thereof. The olefin oxide is preferably, but not limited to, tetrahydrofuran, ethylene oxide, propylene oxide, 1,2-butylene oxide, 2,3-butylene oxide, styrene oxide, or a mixture thereof, particularly preferably ethylene oxide and/or propylene oxide. The starter is preferably, but not limited to, a polyhydroxy compound or a polyamine-based compound, wherein the polyhydroxy compound is preferably, but not limited to, water, ethylene glycol, 1,2-propanediol, 1,3-propanediol, and diethylene glycol, trimethylolpropane, glycerin, bisphenol A, bisphenol S or a mixture thereof, and the polyamine-based compound is preferably, but not limited to, ethylene diamine, propylene diamine, butane diamine, hexamethylene diamine, diethylene triamine, toluene diamine or a mixture thereof.

Those skilled in the art are familiar with the method for measuring the hydroxyl number, for example, as disclosed in Houben Weyl, Methoden der Organischen Chemie, vol. XIV/2 Makromolekulare Stoffe, p. 17, Georg Thieme Verlag; Stuttgart 1963. The entire content of this document is incorporated herein by reference.

When used in the present invention, the functionality and hydroxyl number of the organic polyols refer to the average functionality and average hydroxyl number, unless otherwise specified.

Optionally, the polyurethane reaction system of the present invention further comprises b2) one or more compounds with the structure of formula (I)

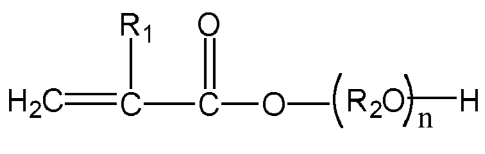

I ,

wherein $R_1$ is selected from hydrogen, methyl or ethyl; $R_2$ is selected from alkylene groups having 2-6 carbon atoms; and n is an integer selected from 1-6.

In the preferred embodiments of the present invention, $R_2$ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, propane-2,2-bis(4-phenylene), 1,4-xylylene, 1,3-xylylene, 1,2-xylylene.

In the preferred embodiments of the present invention, component b2) is selected from hydroxyethyl methacrylate, hydroxypropyl methacrylate, hydroxybutyl methacrylate, hydroxyethyl acrylate, hydroxypropyl acrylate, hydroxybutyl acrylate or a combination thereof.

The compound of formula (I) may be prepared by a method commonly used in the art, for example, by esterification of (meth)acrylic anhydride, (meth)acrylic acid or (meth)acrylic halide compound with $HO-(R_2O)_n-H$, as is well known to those skilled in the art, for example, in the description in chapter 3 of "Handbook of Polyurethane Raw Materials and Auxiliaries" (Liu Yijun, published on April 1, 2005), and chapter 2 of "Polyurethane Elastomer" (Liu Houjun, published in August 2012) , the entirety of which is incorporated herein by reference.

The polyurethane reaction system of the present invention further comprises C) a free radical initiator. The free radical initiator used in the present invention may be added to the polyol component or the isocyanate component or both. Usable free radical initiators include, but are not limited to, peroxides, persulfides, peroxycarbonates, peroxyboric acid, azo compounds, or other suitable free radical initiators which can initiate the curing of double bond-containing compounds, examples of which include tert-butyl peroxy isopropyl carbonate, tert-butyl peroxy-3,5,5-trimethylhexanoate, methyl ethyl ketone peroxide, cumene hydroperoxide. The radical initiator is usually present in a content of 0.1 to 8% by weight, based on 100% by weight of the total weight of the polyurethane reaction system of the present invention. In addition, an accelerator such as a cobalt compound or an amine compound may also be present.

Optionally, the polyurethane reaction system may further comprise a catalyst for catalyzing the reaction of isocyanate groups (NCO) with hydroxyl groups (OH). Suitable catalysts for the polyurethane reaction are preferably, but not limited to, amine catalysts, organometallic catalysts, or mixtures thereof. The amine catalyst is preferably, but not limited to, triethylamine, tributylamine, triethylenediamine, N-ethylmorpholine, N,N,N',N'-tetramethyl-ethylenediamine, pentamethyldiethylene-triamine, N-methylaniline, N,N-dimethylaniline, or mixtures thereof. The organometallic catalyst is preferably, but not limited to, organotin compounds such as tin(II) acetate, tin(II) octoate, tin ethylhexanoate, tin laurate, dibutyl tin oxide, dibutyltin dichloride, dibutyltin diacetate, dibutyltin maleate, dioctyltin diacetate, or mixtures thereof. The catalyst is used in an amount of 0.001 to 10% by weight, based on 100% by weight of the total weight of the polyurethane reaction system of the present invention.

In an example of the present invention, in the polyaddition reaction of isocyanate groups and hydroxyl groups, the isocyanate groups may be those contained in the organic polyisocyanate (component A) or may also be those contained in the reaction intermediate of the organic polyisocyanate (component A) with the organic polyol (component b1)) or the component b2). The hydroxyl groups may be those contained in the organic polyol (component b1)) or the component b2) or may also be those contained in the reaction intermediate of the organic polyisocyanate (component A) with the organic polyol (component b1)) or the component b2).

In an example of the present invention, the radical polymerization reaction is a polyaddition reaction of ethylenic bonds, wherein the ethylenic bonds may be those contained in the component b2) or may also be those contained in the reaction intermediate of the component b2) with the organic polyisocyanate.

In an example of the present invention, the polyurethane polyaddition reaction (i.e., the polyaddition reaction of isocyanate groups with hydroxyl groups) is present simultaneously with the radical polymerization reaction. It is well known to those skilled in the art that suitable reaction conditions can be selected such that the polyurethane polyaddition reaction and the radical polymerization reaction are carried out in succession. However, the polyurethane matrix thus obtained has a different structure from that of a polyurethane matrix obtained by simultaneous polyaddition reaction and radical polymerization reaction. Thus, the mechanical properties and processability of the prepared polyurethane composites are different.

Optionally, the above polyurethane reaction system may further comprise an auxiliary or additive, including but not limited to a filler, an internal demolding agent, a flame retardant, a smoke suppressant, a dye, a pigment, an antistatic agent, an antioxidant, a UV stabilizer, a diluent, a defoaming agent, a coupling agent, a surface wetting agent, a leveling agent, a water scavenger, a catalyst, a molecular sieve, a thixotropic agent, a plasticizer, a foaming agent, a foam stabilizer, a foam homogenizing agent, an inhibitor against free radical reaction or a combination thereof. These components may optionally be included in the isocyanate component A) and/or the polyurethane reaction system B) of the present invention. These components may also be stored separately as a component D), which is mixed with the isocyanate component A) and/or the polyurethane reaction system B) of the present invention and then used for the preparation of polyurethane composites. The selection of the above-mentioned auxiliaries or additives and the above-mentioned content that is not described in detail can be found in CN104974502A, which is entirely incorporated herein by reference.

As mentioned above, it was found unexpectedly that the method of the present invention can also be used for the detection of the dehumidifying degree in the polyurethane vacuum infusion process, by which the dehumidifying degree in the polyurethane vacuum infusion process can be determined objectively and accurately. Thus, it is possible to determine the time to stop the dehumidifying and start with the infusion in time, thereby improving production efficiency, saving costs, and being more economical and environmentally friendly.

Those ordinary skilled in the art should understand that the present invention is not limited to the above-mentioned embodiments, and can be implemented in many other forms without departing from its spirit and scope.

Therefore, the examples and embodiments shown are regarded as illustrative rather than restrictive. The present invention may cover various modifications and replacements without departing from the spirit and scope of the present invention as defined by the appended claims.

Unless indicated otherwise, all technical and scientific terms used herein have the same meaning as commonly understood by those skilled in the art. When the definition of a term herein conflicts with the meanings commonly understood by those skilled in the art, the definition described herein shall apply.

Unless indicated otherwise, all numbers expressing quantities of ingredients, reaction conditions and the like used herein are to be understood as being modified by the wording "about".

The wording "and/or" used herein refers to one or all of the cited elements.

The wording "include" and "comprise" used herein cover the presence of the mentioned elements alone and the presence of other elements that are not mentioned in addition to the mentioned elements.

All percentages in the present invention are weight percentage, unless otherwise stated.

The present invention is now described by the examples for illustrative purposes and not for limitation.

## Examples

Description of tested performance parameters in the examples of the present application: Functionality refers to a value determined according to the formula in the industry:

$$\text{Functionality} = \text{hydroxyl value} * \text{molecular weight} / 56100;$$

wherein the molecular weight is determined by GPC high performance liquid chromatography;

Isocyanate index refers to a value determined by the following formula:

$$\text{Isocyanate index (\%)} = \frac{\text{Moles of isocyanate groups (NCO groups) in component A}}{\text{Moles of groups reactive toward isocyanate groups in component B}} \text{X } 100\%$$

NCO content refers to the content of NCO groups in the system, measured according to GB/T 12009.4-2016.

Table 1- Description of raw materials

| Name of raw materials | Specifications/Types | Suppliers |
|---|---|---|
| Polyols | Baydur 78BD085 | Covestro Polymers (China) Co., Ltd. |
| Isocyanate | Desmodur 44CP20 | Covestro Polymers (China) Co., Ltd. |
| Biaxial glass fiber fabric | EKT811(+45°/-45°) Specification: 808g/$m^2$ | Chongqing Polycomp International Corp. |
| Injection pipe/Omega hose | Material: PE | Shanghai Leadgo-tech Co., Ltd |
| Flow mesh | Material: PE | Shanghai Leadgo-tech Co., Ltd |
| Core material | Balsa wood (density: 160g/$m^2$; thickness: 1 inch) | Colas |
| Polyester peel ply | Gram weight: 95g/$m^2$ | Leadgo-tech Co., Ltd |
| Film/ vacuum bag film | Thickness:50um | Leadgo-tech Co., Ltd |
| Adhesive strip | Type: WD209 | Shanghai KangdDa New Materials Co., Ltd |

(continued)

| Name of raw materials | Specifications/Types | Suppliers |
|---|---|---|
| Warming blanket | Specification: 1 m wide, 2 m long, and 30 mm thick | Relevant market |
| Humidity paper | Cobalt chloride (specification: 5 quires per box, 100 strips, outer packaging size 73*30* 15mm, about 20g) | Shanghai San'aisi Reagent Co., Ltd. |
| Colorimeter | spectro-guide 45/0 gloss | BYK |
| Desiccant | 3A molecular sieve | Shanghai Hengye Molecular Sieve Co., Ltd. |

**Description of test methods:**

Temperature test: An infrared thermometer was used to monitor the surface temperature; Color/color value test: In the color value test of the present invention, the colors to be tested (for example, the color of the test paper before and after the color change) were tested respectively using a colorimeter (for example, spectro-guide 45/0 gloss from BYK) according to the standard of CIE 1976 L*a*b*, so that the L*a*b* color value were obtained.

**Examples**

Examples 1:

After drying the core material with a length*width of 400*400mm, a layer of desiccant was sprinkled on the outer surface of the dried core material (covering about 90% of the outer surface area of the core material), as shown in Figure 2. The obtained core material was ready for later use. Two layers of biaxial glass fiber fabrics with length*width of 500*500 mm were laid on the mold. Then, the core material was placed on the glass fiber fabrics, wherein the grooved side pointed upward. Afterwards, two more layers of biaxial fiber glass fabrics with length*width of 500*500 mm were laid on the core material. A piece of peel ply was placed on the second layer of glass fiber fabric. The flow mesh was placed on the peel ply. An injection pipe with a length of 300 mm was obtained by cutting and placed next to the flow mesh. Several humidity test papers were laid on the peel ply. Two loops of adhesive sealing strips were stuck around the layers laid in the mold. Then, said layers were sealed with two layers of vacuum bag film.

Firstly, the heater for the mold was set to 45 °C, then the temperature was gradually lowered to 35 °C. The system was heated and the vacuum pump was connected to the injection pipe. The system was vacuumized to 0 to 20 mbar and covered by a warming blanket for heating and dehumidifying, until the color of the humidity test paper changed into blue color (wherein the required dehumidifying time was recorded of 1.5 hours, and the color value on the humidity test paper at this time was tested, the results of which were shown in Table 2). Then, the polyurethane reaction system was infused. After the completion of infusion, the system was heated and cured, then demolded. The auxiliary materials such as the peel ply and the flow mesh were removed. The resulting polyurethane composite material was examined. It was found that there were no defects on the surface (for details as shown in Figure 3), and all physical properties met the requirements.

Comparative Example 1:

The steps of Example 1 were repeated, with the exception that after drying the core material, no desiccant was sprinkled for later use. Two layers of biaxial glass fiber fabrics with length*width of 500*500 mm were laid on the mold. Then, the core material was placed on the glass fiber fabrics, wherein the grooved side pointed upward. Afterwards, two more layers of biaxial fiber glass fabrics with length*width of 500*500 mm were laid on the core material. A piece of peel ply was placed on the second layer of glass fiber fabric. The flow mesh was placed on the peel ply. An injection pipe with a length of 300 mm was obtained by cutting and placed next to the flow mesh. Several humidity test papers were laid on the peel ply. Two loops of adhesive sealing strips were stuck around the layers laid in the mold. Then, said layers were sealed with two layers of vacuum bag film.

Firstly, the heater for the mold was set to 45 °C, then the temperature was gradually lowered to 35 °C (gradually changed from high to low temperature with the heating time). The system was heated and the vacuum pump was connected to the injection pipe. The system was vacuumized to 0 to 20 mbar and covered by a warming blanket for heating and dehumidifying for 4 hours (wherein the humidity test paper was still pink, and the color value of the humidity

test paper at this time was tested, the results of which were shown in Table 2). Then, the polyurethane reaction system was infused. After the completion of infusion, the system was heated and cured, then demolded. The auxiliary materials such as the peel ply and the flow mesh were removed. The resulting polyurethane composite material was examined. It was found that there were defects on the surface (for details as shown in Figure 4).

Table 2 - Color values of humidity test papers used in Comparative Example 1 and Example 1

| Color value | Comparative Example 1 | Examples 1 |
|---|---|---|
| L* | 84.83 | 69.58 |
| a* | 6.65 | -11.11 |
| b* | 0.41 | -18.5 |

After repeated experiments, it was found unexpectedly that the method of the present invention comprising the features such as using a desiccant, as shown in example 1, can greatly shorten the time for preparing composite materials, and produce composite materials with excellent quality and good surface conditions economically and efficiently, which facilitates further application and processing. In contrast, Comparative Example 1 required a longer time for subsequent dehumidifying. Blisters were prone to occur on the surface and the surface condition were so poor that it could not even meet the requirements of subsequent application and further processing. In addition, it can be seen from the above experimental results that the method of the present invention can indicate the time required for dehumidifying objectively and accurately, and improves the production efficiency and accuracy significantly, thereby improving the yield greatly.

Furthermore, the method comprising the moisture indicating agent can indicate the time for introducing the resin reaction system accurately and objectively, thereby improving the production efficiency, and saving time and costs.

## Claims

1. A method for treating a core material, comprising:

   drying at least a core material;
   at least partially covering the at least a core material with at least a desiccant.

2. The method according to claim 1, wherein the desiccant is selected from molecular sieve desiccants with a type selected from 3A, 4A, 5A, 10Z, 13Z, Y, sodium mordenite type or mixtures thereof, preferably 3A.

3. The method according to claim 1 or 2, wherein the at least partial covering means covering ≥ 50% of the outer surface area of the core material, preferably ≥ 60% of the outer surface area of the core material, more preferably ≥ 70% of the outer surface area of the core material.

4. The method according to claim 1 or 2, wherein the core material is preferably balsa wood, PVC foam, SAN foam, polyurethane foam, PS foam, PMI foam and PET foam.

5. The method for preparing a composite material, comprising:

   carrying out the method for treating a core material according to any of claims 1 to 4;
   introducing a resin reaction system and curing the resin reaction system to obtain the composite material.

6. The method according to claim 5, wherein the resin is selected from epoxy resins, polyurethane resins, phenolic resins, acrylonitrile-butadiene-styrene resins, polyamide resins, polyethylene resins or any combination thereof, preferably epoxy resins, polyurethane resins or any combination thereof, and more preferably polyurethane resins.

7. The method according to claim 6, wherein the polyurethane resin reaction system comprises:

   component A comprising one or more organic polyisocyanates;
   component B comprising:

b1) one or more organic polyols in a content of 21-60% by weight, based on 100% by weight of the total weight of the polyurethane reaction system,
b2) one or more compounds with the structure of formula (I)

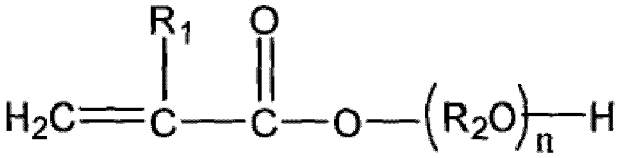

I

wherein R1 is selected from hydrogen, methyl or ethyl; R2 is selected from alkylene groups having 2-6 carbon atoms, propane-2,2-bis(4-phenylene), 1,4-xylylene, 1,3-xylylene, 1,2-xylylene; and n is an integer selected from 1-6; and

component C, a free radical initiator.

**8.** A composite material prepared by the method for preparing a composite material according to any one of claims 5 to 7.

**9.** A method for preparing a reinforced composite material, comprising:

1) carrying out the method for treating a core material according to any of claims 1 to 4;
2) placing at least a reinforcing material, the core material treated in step 1), and at least a flow medium in a mold;
3) dehumidifying;
4) introducing a resin reaction system and curing the resin reaction system to obtain the reinforced composite material.

**10.** The method according to claim 9, wherein at least a humidity indicating agent is placed on the reinforcing material, the core material or the flow medium before the dehumidifying in step 3), and the dehumidifying is performed under vacuum until the color of the humidity indicating agent changes.

**11.** The method according to claim 10, wherein the color changes into that selected from any color of range $b^* < -15$, preferably $< -17$, and more preferably -25 to -18 in the color value (the test method referring to CIE 1976 L*a*b*).

**12.** The method according to any one of claims 9-11, wherein the time needed for dehumidifying in the method for preparing a reinforced composite material comprising 1) carrying out the method for treating a core material is reduced by ≥ 50%, preferably ≥ 70%, and more preferably ≥ 100%, compared with the method for preparing a reinforced composite material without 1) carrying out the method for treating a core material.

**13.** A reinforced composite material prepared by the method for preparing a reinforced composite material according to any one of claims 9-12.

**14.** Use of the reinforced composite material prepared by the method for preparing a reinforced composite material according to claim 13 in blades for wind turbines.

**15.** A resin product comprising the composite material according to claim 8, wherein the resin product is selected from spar caps, web plates, blade roots and/or blade housings of turbine blades, antenna radomes, single or sandwich continuous sheets, yacht shells, window frames, door frames, ladder frames, cross arms for telegraph poles, tent brackets, solar cell holders, solar cell frames, antenna radomes, radar radomes, highway guardrails, cable troughs, container floors, winding pipes, telegraph poles, engine hoods, car trunks, luggage racks, golf shafts, tennis shafts, badminton shafts, bicycle frames, surfboards or snowboards, preferably spar caps, web plates, blade roots and/or blade shells of the turbine blades.

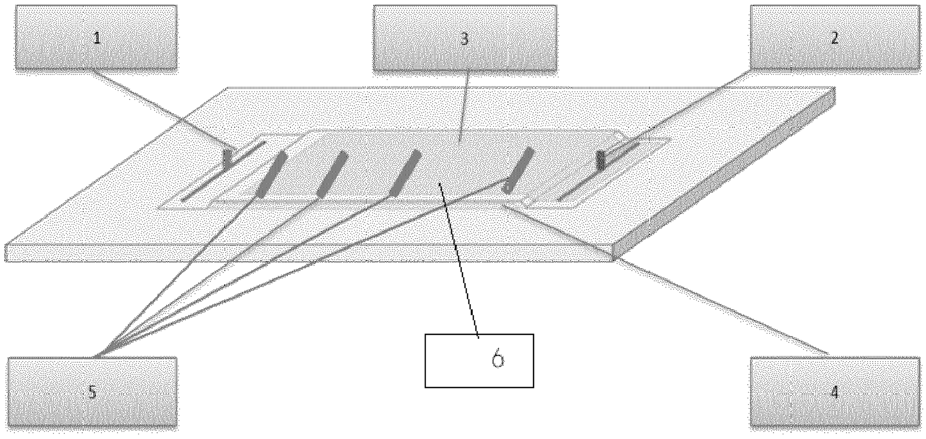


Fig. 1

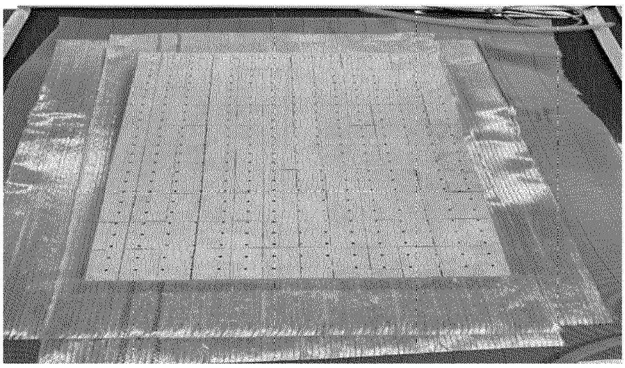

Fig. 2

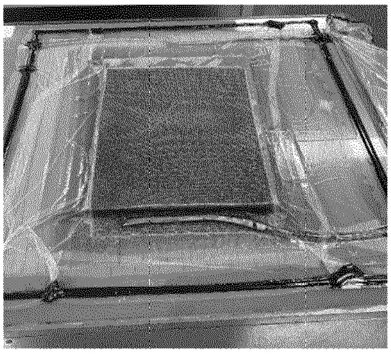

Fig. 3

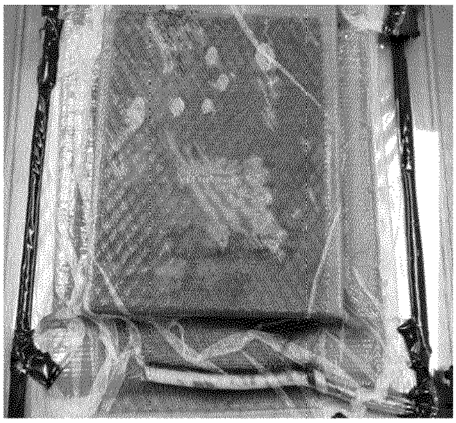

Fig. 4

Europäisches Patentamt
European Patent Office
Office européen des brevets

# EUROPEAN SEARCH REPORT

Application Number
EP 21 17 1099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2019/048505 A1 (HEDLUND JONAS [SE]; HOLMGREN ALLAN [SE]; YU LIANG [SE]) 14 March 2019 (2019-03-14)<br>* paragraphs [0001], [0018]; figures 2a, 2b; example 2 * | 1-3<br>4-15 | INV.<br>C08G18/40<br>C08G18/72<br>C08J5/00<br>C08K9/02<br>B29C70/04<br>B29C70/48 |
| A | WO 2015/155195 A1 (BAYER MATERIALSCIENCE AG [DE] ET AL.) 15 October 2015 (2015-10-15)<br>* page 1, lines 2-7 *<br>* page 2, line 11 - page 3, line 7 *<br>* page 12, lines 14-21 *<br>* page 14, lines 20-25; claims; examples * | 1-15 | |
| A | EP 3 766 676 A1 (COVESTRO DEUTSCHLAND AG [DE]) 20 January 2021 (2021-01-20)<br>* paragraphs [0001], [0008] - [0017], [0074]; claims; examples * | 1-15 | |
| A | US 2012/245286 A1 (YOUNES USAMA E [US]) 27 September 2012 (2012-09-27)<br>* paragraphs [0001], [0020], [0045] - [0046]; claims; examples * | 1-15 | TECHNICAL FIELDS SEARCHED (IPC)<br>C08G<br>C08K<br>C08J<br>B29C |

The present search report has been drawn up for all claims

2

| Place of search | Date of completion of the search | Examiner |
|---|---|---|
| Munich | 30 September 2021 | Eigner, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 17 1099

This annex lists the patent family members relating to the patent documents cited in the above-mentioned European search report. The members are as contained in the European Patent Office EDP file on
The European Patent Office is in no way liable for these particulars which are merely given for the purpose of information.

30-09-2021

| Patent document cited in search report | Publication date | Patent family member(s) | Publication date |
|---|---|---|---|
| WO 2019048505 A1 | 14-03-2019 | CN 111065447 A | 24-04-2020 |
| | | EP 3678761 A1 | 15-07-2020 |
| | | JP 2020532487 A | 12-11-2020 |
| | | US 2020246775 A1 | 06-08-2020 |
| | | WO 2019048505 A1 | 14-03-2019 |
| WO 2015155195 A1 | 15-10-2015 | CA 2944545 A1 | 15-10-2015 |
| | | CN 104974502 A | 14-10-2015 |
| | | DK 3129422 T3 | 26-04-2021 |
| | | EP 3129422 A1 | 15-02-2017 |
| | | JP 2017513979 A | 01-06-2017 |
| | | PT 3129422 T | 30-04-2021 |
| | | US 2017037203 A1 | 09-02-2017 |
| | | US 2019225761 A1 | 25-07-2019 |
| | | WO 2015155195 A1 | 15-10-2015 |
| EP 3766676 A1 | 20-01-2021 | CN 112238628 A | 19-01-2021 |
| | | EP 3766676 A1 | 20-01-2021 |
| US 2012245286 A1 | 27-09-2012 | AU 2012237714 A1 | 19-09-2013 |
| | | BR 112013024040 A2 | 13-12-2016 |
| | | CN 103443157 A | 11-12-2013 |
| | | DK 2688931 T3 | 26-11-2018 |
| | | EP 2688931 A2 | 29-01-2014 |
| | | ES 2693127 T3 | 07-12-2018 |
| | | JP 5980897 B2 | 31-08-2016 |
| | | JP 2014508850 A | 10-04-2014 |
| | | RU 2013147457 A | 27-04-2015 |
| | | TW 201245258 A | 16-11-2012 |
| | | US 2012245286 A1 | 27-09-2012 |
| | | WO 2012134878 A2 | 04-10-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20200316892 A1
- CN 106751737 B
- CN 106414577 A
- CN 104149359 A
- CN 105308085 B
- CN 104974502 A


### Non-patent literature cited in the description


- Makromolekulare Stoffe. Houben Weyl, Methoden der Organischen Chemie. Georg Thieme Verlag, 1963, vol. XIV/2
- **LIU YIJUN.** Handbook of Polyurethane Raw Materials and Auxiliaries. 01 April 2005
- **LIU HOUJUN.** Polyurethane Elastomer. August 2012